## Europäisches Patentamt
## European Patent Office
## Office européen des brevets

(19)

(11) Veröffentlichungsnummer: **0 266 480**
**B1**

(12)

# EUROPÄISCHE PATENTSCHRIFT

(45) Veröffentlichungstag der Patentschrift:
**13.06.90**

(51) Int. Cl.⁵: **G01P 13/02**, G01P 5/01

(21) Anmeldenummer: **87103423.7**

(22) Anmeldetag: **10.03.87**

(54) **Vorrichtung zur Bestimmung der Durchflussrichtung.**

(30) Priorität: **04.11.86  DE 3637540**

(43) Veröffentlichungstag der Anmeldung:
**11.05.88 Patentblatt 88/19**

(45) Bekanntmachung des Hinweises auf die Patenterteilung:
**13.06.90 Patentblatt 90/24**

(84) Benannte Vertragsstaaten:
**DE FR GB IT SE**

(56) Entgegenhaltungen:
**EP-A- 0 035 680**
**DE-A- 3 034 936**
**DE-A- 3 144 230**
**DE-B- 1 224 546**
**DE-B- 2 444 511**
**US-A- 3 995 481**

(73) Patentinhaber: **VDO Adolf Schindling AG,**
**Gräfstrasse 103, D-6000 Frankfurt/Main 90(DE)**

(72) Erfinder: **Porth, Wolfgang, Röhrborngasse 70,**
**D-6000 Frankfurt am Main(DE)**
Erfinder: **Weibler, Wolfgang, Dr., Vor der Heide 14,**
**D-6238 Hofheim a. T.(DE)**

(74) Vertreter: **Klein, Thomas, Dipl.-Ing. (FH), Sodener**
**Strasse 9 Postfach 6140, D-6231 Schwalbach a. Ts.(DE)**

## Beschreibung

Die Erfindung betrifft eine Vorrichtung zur Bestimmung der Durchflußrichtung eines mit bekanntem Massenstrom im wesentlichen gerichtet strömenden Fluids mit einem Bauelement zur Erzeugung einer laminaren Strömung, einem diesem zugeordneten, elektrische Signale abgebenden, turbulenzempfindlichen Sensorelement, und einem Wirbel bildenden Element. Ein Vorrichtung mit den gleichen technischen Merkmalen, die aber zur Bestimmung der Fließgeschwindigkeit eines Fluids konzipiert ist, ist aus dem Dokument DE-A 3 144 230 bekannt. Die Steuerung der Treibstoffeinspritzung von Verbrennungs-Motoren erfolgt in Abhängigkeit vom Massenstrom der Ansaugluft. Zur Messung des Massenstroms dient in den vielen Fällen eine nach dem elektrothermischen Prinzip arbeitende Massenstrom-Meßvorrichtung. Eine derartige Meßvorrichtung weist zur Temperaturkompensation zumindest ein Temperatur-Meßelement auf und die eigentliche Massenstrom-Meßvorrichtung, deren Hauptbestandteil ein elektrisch heizbares im Massenstrom angeordnetes Widerstandselement ist. Die Wärmeableitung von diesem Heizelement ist ein Maß für den Massenstrom, wobei umsomehr Wärme abgeführt wird, je stärker der Massenstrom ist (DE-A 3 034 936).

Ein derartige Massenstrom-Meßvorrichtung ist bezüglich der Strömungsrichtung sehr unempfindlich, denn unabhängig davon, ob die Strömung vorwärts oder rückwärts gerichtet ist, wird entsprechend der Wärmeableitung praktisch das gleiche elektrische Signal abgegeben. Mit anderen Worten kann mit einer bekannten Massenstrom-Meßvorrichtung lediglich der Betrag des Massenstroms ermittelt werden, nicht aber dessen Strömungsrichtung. Es hat sich nun gezeigt, daß im Ansaugsystem von Verbrennungsmotoren bei bestimmten Betriebszuständen Schwingungen der Luftsäule eintreten, welche der konstanten Strömung überlagert sind, so daß daraus eine rasch pulsierende Strömung resultiert. Je nach minütlicher Drehzahl und Zylinderzahl liegt die Grundrequenz der Schwingung im Bereich zwischen 10 und 1000 Hertz. Je nach Strömungsgeschwindigkeit und Schwingungsamplitude treten während kurzer Zeitintervalle Rückströmungen auf. Aufgrund des oben geschilderten Meßprinzips der Massenstrom-Meßvorrichtung erzeugen Rückströmungen ein gleiches Meßsignal wie Ansaugtömungen, so daß letztlich eine zu hohe Menge an Treibstoff dem Motor zugeführt wird.

Es sind richtungsempfindliche Strömungsmesser bekannt, die zwei auf gemeinsamem Tragkörper angeordnete Widerstands-Elemente aufweisen, die in Strömungsrichtung hinterinander liegend eingebaut werden. Derartige Strömungsmesser eignen sich aufgrund ihrer Trägheit jedoch nicht zur Erfassung schneller Änderungen der Strömung.

Aufgabe der vorliegenden Erfindung ist es, eine insbesondere im Ansaugsystem eines Verbrennungsmotors anordbare, rasch ansprechende Vorrichtung zur Bestimmung der Durchflußrichtung eines pulsierenden Luftstromes während des zeitraums einer Pulsation zu schaffen.

Erfindungsgemäß wird die Aufgabe dadurch gelöst, daß bei einer Vorrichtung anch dem Oberbegriff des Anspruchs 1 das turbulenzempfindliche Sensorelement im Strömungsverlauf zwischen den Bauelement zur Erzeugung einer laminaren Strömung und dem Wirbel bildenden Element angeordnet ist.

Dadurch wird erreicht, daß das Sensorelement einer stark turbulenten Strömung ausgesetzt ist, wenn das Fluid in Richtung vom wirbelbildenden Element zum Sensorelement strömt. Bei umgekehrter Strömungsrichtung befindet sich das Sensorelement im ungestörten laminaren Strom des Fluids. Das Sensorelement gibt unterschiedliche elektrische Signale ab, je nachdem ob es laminarer oder turbulenter Strömung ausgesetzt ist.

Dieselbe Anordnung von wirbelbildendem Element, Sensor und Bauelement zur Erzeugung einer laminaren Strömung ist aus EP-A 0 035 680, Abb. III bekannt, jedoch ist die Vorrichtung aus EP-A 0 035 680 zum Messen der Strömungsgeschwindigkeit ausgelegt und ungeeignet zum Messen der Strömungsrichtung.

In der bevorzugten Ausführungsform ist das Sensorelement ein elektrisch beheiztes temperaturabhängiges Widerstandselement. Dieses Widerstandselement wird vom vorbeiströmenden Fluid gekühlt, wobei die Intensität und Gleichmäßigkeit der Kühlung vom Strömungszustand des Fluids abhängt. Während bei laminarer Strömung eine völlig konstante Kühlung erfolgt, so tritt bei turbulenter Strömung eine wesentlich intensivere und mit der Frequenz der Turbulenzen variierende Kühlwirkung ein. Demzufolge treten bei turbulenter Strömung hochfrequente Widerstandsänderungen ein, welche dem durch das Widerstandselement geleiteten Strom als hochfrequente Modulation aufgeprägt sind. Es versteht sich von selbst, daß für eine derartige Messung das Widerstandselement eine äußerst geringe thermische Trägheit aufweisen muß, um die kurzzeitigen Schwankungen nicht von sich aus auszugleichen.

Zur meßtechnischen Erfassung der Strom- bzw. Spannungsschwankungen kann das temperaturabhängige Widerstandselement in einem Zweig einer zusammen mit drei weiteren Festwiderständen gebildeten Brückenschaltung angeordnet sein, deren Brückenspannung eine den Widerstandsänderungen entsprechende Modulation erfährt.

Zur Erreichung eines hohen Signalpegels ist es vorteilhaft, wenn das Widerstandselement aus einem metallischen Leiter wie Nickel oder Platin besteht, also einem Material mit hohem positivem Temperatur-Koeffizienten (PTC).

In Sonderfällen kann es jedoch auch wünschenswert sein, wenn das Widerstandselement einen negativen Temperatur-Koeffizienten (NTC) aufweist.

Ein rasches Ansprechen der Widerstandselemente ist gewährleistet, wenn diese drahtförmig ausgebildet sind. Dabei wird das Widerstandselement freistehend in der Strömung angeordnet und über den Querschnitt des Drahtes kann die Massenträgheit und somit die Ansprechzeit des Widerstandselementes beeinflußt werden. Unter "Draht" ist hier jegliche langgestreckte Ausbildung des Widerstandes zu verstehen, wobei der Querschnitt rund, eckig oder flach sein kann. Insbesondere bei dünnen Drähten, welche ein rasches Ansprechen ermöglichen, ist Rücksicht auf die mechanische Stabilität zu nehmen.

Es hat sich daher auch bewährt, Widerstandselemente folienförmig auszubilden, wobei die Widerstandsschicht auf ein Substrat mit geringer Wärmekapazität und großer Temperaturleitzahl aufgebracht ist.

Derartige Widerstandselemente können insbesondere in mikrotechnische Bauelemente integriert werden. Die miniaturisierte Ausführung hat den Vorteil, daß die turbulente Strömung punktuell erfaßt wird. Die geringe räumliche Ausdehnung des Widerstandselementes hat weiterhin den Vorteil, daß eine Mittelwertbildung aufgrund der geringen Wärmekapazität unterbleibt.

Ein reproduzierbares Meßsignal wird dann erhalten, wenn eine Regeleinheit zur Regelung der Speisespannung der Brückenschaltung zur Einstellung der Meßtemperatur des temperaturabhängigen Widerstandselementes vorgesehen ist. Auf diese Weise erfolgt sowohl bei geringem, als auch bei hohem Massenstrom die Messung bei gleicher Temperatur des Meßwiderstandes. Zur Einstellung der Speisespannung kann beispielsweise ein Signal der Massenfluß-Meßvorrichtung verarbeitet werden. Es ist jedoch auch möglich, die Speisespannung in Abhängigkeit vom Widerstands-Mittelwertes des temperaturabhängigen Widerstandselementes so zu regeln, daß dieser Wert konstant bleibt. So weist das Meßsignal einen konstanten Grundpegel auf, dem die strömungsbeeinflußte Modulation aufgeprägt ist. Zur Reinigung wird das Widerstandselement bei erhöhter Speisespannung kurzzeitig ausgeheizt.

In weiterer Ausbildung der Erfindung wird vorgeschlagen, die erfindungsgemäße Vorrichtung mit einer an sich bekannten Vorrichtung zur Steuerung der Treibstoff-Einspritzung in Abhängigkeit vom Massenstrom der angesaugten Luftmenge zu verbinden, wobei die Treibstoff-Dosierung in Abhängigkeit von den bei turbulenter Strömung abgegebenen Signalen des Sensorelementes erfolgt. Auf diese Weise ist es möglich, die in bestimmten Betriebszuständen eintretende zu hohe Dosierung von Treibstoff zu vermindern, sobald über die erfindungsgemäße Vorrichtung eine Rückströmung im Ansaugsystem des Verbrennungsmotors festgestellt ist.

Eine besonders vorteilhafte Ausführungsform der erfindungsgemäßen Vorrichtung liegt dann vor, wenn das Sensorelement mit dem Eingang eines Verstärkers verbunden ist, dessen Ausgang über einen Schmitt-Trigger mit dem Eingang einer Steuereinheit verbunden ist, welche mit einem zweiten Eingang außerdem mit einer Massenstrom-Meßvorrichtung verbunden ist und ausgangsseitig mit einer Treibstoff-Dosiervorrichtung verbunden ist. Dabei wird das von einer an sich bekannten Massenstrom-Meßvorrichtung an eine ebenfalls bekannte Treibstoff-Dosiervorrichtung abgegebene Meßsignal erfindungsgemäß durch das von der Vorrichtung zur Bestimmung der Durchflußrichtung abgegebene Korrektursignal beeinflußt.

Es hat sich weiterhin bewährt, das der Pulsation unterliegende Ausgangssignal der Steuereinheit vor dem Eingang in die Treibstoff-Dosiervorrichtung durch einen Integrator zu glätten.

Da die Erkennung der turbulenten Strömung ausschließlich aufgrund des hochfrequenten Signalanteils erfolgt, ist es von Vorteil, wenn zwischen dem Verstärker und dem Schmitt-Trigger ein Bandfilter angeordnet ist, das als Hochpaß ausgebildet ist. Es hat sich auf bewährt, einen Schmalbandverstärker vorzusehen, der die Funktion eines Breitbandverstärkers und eines anschließenden Bandfilters in sich vereinigt. In jedem Fall ist es empfehlenswert, vor dem Eingang des Schmitt-Triggers einen Integrator zur Mittelwertbildung anzuordnen.

Das in den Zeitabschnitten der Rückströmungen aufgrund der durch den Störkörper erzeugten Turbulenz auftretende Rauschsignal ist in seiner Amplitude vom Massenstrom abhängig. Das führt bei unveränderlichem Eingangspegel des Schmitt-Triggers zu Fehlern in der Erfassung des Zeitintervalls der Rückströmung. Es hat sich daher als vorteilhaft erwiesen, den Eingangspegel in Abhängigkeit vom Massenstrom zu verändern. Empfehlenswert ist, den Eingangspegel zusätzlich als Funktion von Motordrehzahl und Drosselklappenwinkel zu variieren.

Sofern die Massenstrom-Meßvorrichtung und die Vorrichtung zur Bestimmung der Durchflußrichtung voneinander beabstandet sind, kann es vorkommen, daß die Signale beider Vorrichtungen zeitlich verschoben zueinander eintreffen. Es ist dann empfehlenswert, zwischen dem Ausgang des Schmitt-Triggers und dem Eingang der Steuereinheit einen Phasenschieber anzuordnen. Wird in besonderen Fällen eine von der Zeitdauer des Korrektursignals verschiedene Zeitdauer der Beeinflussung des Meßsignals gewünscht, wo ist es vorteilhaft, vor dem Eingang der Steuereinheit einen Monoflop anzuordnen. Dadurch kann ein kurzer eingehender Impuls entsprechend verlängert oder auch verkürzt werden.

Das Korrektursignal kann grundsätzlich in verschiedener Weise auf das Meßsignal einwirken. Dabei hat es sich bewährt, daß ein Korrektursignal nur dann abgegeben wird, wenn eine Rückströmung stattfindet, d.h. daß bei Strömung in Ansaugrichtung kein Signal an die Steuereinheit abgegeben wird. Das Korrektursignal kann grundsätzlich auf drei besonders vorteilhafte Weisen auf das Meßsignal einwirken:

1. Die Steuereinheit kann das von der Massenstrom Meßvorrichtung eingehende Meßsignal so lange unterdrücken, wie ein Korrektursignal am zweiten Eingang der Steuereinheit anliegt. Auf diese einfache Art und Weise kann das unnötige und schädlich Überdosieren des Treibstoffes vermieden werden. Es versteht sich von selbst, daß gerade bei einer derartigen Vorrichtung einem das Ausgangssignal glättenden Integrator besondere Bedeutung zukommt.

2. Die Steuereinheit kann den während der Zeitdauer eines am Eingang anliegenden Korrektursignals festgestellten Wert des von der Massenstrom-Meßvorrichtung eingehenden Meßsignals von demjenigen Wert des Meßsignals subtrahieren, der im Zeitraum des ausbleibenden Korrektursignals festgestellt ist. Diese theoretisch korrekte Beeinflussung setzt voraus, daß sowohl der Massenstrom als auch die Strömungsrichtung völlig trägheitslos und unter gleichen Meßbedingungen festgestellt werden. Dies ist in der Praxis nur mit großem Aufwand zu erreichen. So besitzt auch die Massenfluß-Meßvorrichtung einen gewissen integrierenden Charakter, da die bei Rückströmung vom Meßelement erwärmte Luft nach Wechsel zur normalen Strömungsrichtung das Meßelement nochmals bestreicht und somit weniger abkühlt. Daher hat sich die nachfolgend beschriebene Beeinflussung als wirtschaftlich am sinnvollsten herausgestellt.

3. Die Steuereinheit kann den während der Zeitdauer eines am Eingang anliegenden Korrektursignals festgestellten Wert des von der Massenstrom-Meßvorrichtung eingehenden Meßsignals auf einen vorher bestimmten Bruchteil reduzieren. Durch Vorgabe des Bruchteils sowie dessen Variation in Abhängigkeit vom Massenstrom und/oder der Drehzahl des Motors ist eine optimale Anpassung an die verschiedenen Betriebszustände und die technischen Gegebenheiten der Meßvorrichtungen möglich.

Weitere Einzelheiten, Vorteile und Merkmale der Erfindung ergeben sich nicht nur aus den Ansprüchen, den diesen zu entnehmenden Merkmalen — für sich und/oder in Kombination —, sondern auch aus der nachstehenden Beschreibung von der in der Zeichnung dargestellten bevorzugten Ausführungsbeispielen.

Es zeigen:

Fig. 1 in schematischer Draufsicht die Anordnung eines Ausführungsbeispiels der erfindungsgemäßen Vorrichtung,
Fig. 2 den schematischen Schaltplan einer Brückenschaltung der erfindungsgemäßen Vorrichtung mit temperaturabhängigem Widerstand,
Fig. 3 schematisch die Schaltungsanordnung zur Steuerung der Treibstoff-Dosiervorrichtung in Weiterbildung der erfindungsgemäßen Vorrichtung.

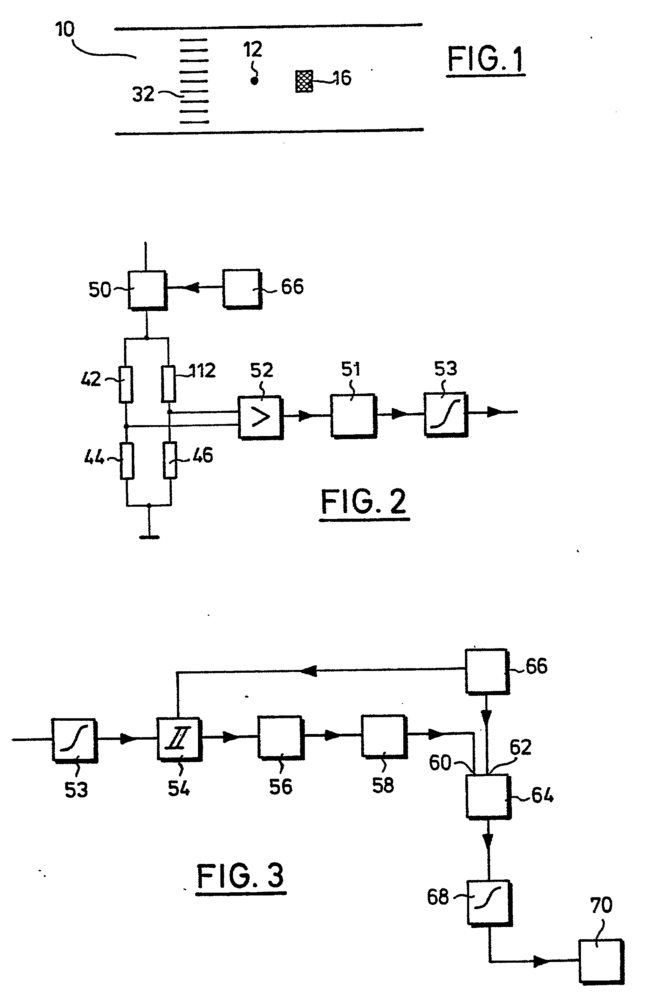

Figur 1 zeigt schematisch in einem Strömungskanal (10) die geometrische Anordnung eines Sensorelementes (12) zwischen einem Strömungsgleichrichter (32) und einem Wirbelelement (16). Das Sensorelement (12) ist schematisch als temperaturabhängiger drahtförmiger Widerstand in Draufsicht gezeichnet, welcher das Zentrum des im Strömungskanal (10) strömenden Massenstroms durchsetzt. Auf der einen Seite des Sensorelementes ist ein Strömungsgleichrichter (32) dargestellt, der als wabenförmiger Körper zahlreiche parallele Strömungskanäle aufweist. Auf der anderen Seite des Sensorelementes ist ein Wirbelelement (16) als ein sich in Längsrichtung parallel zu dem Sensorelement erstreckender flacher Körper dargestellt. Erfolgt die Strömung beispielsweise bei der in Fig. 1 dargestellten Anordnung von links nach rechts, so wird zuerst der Strömungsgleichrichter (32), dann das Sensorelement (12) und zum Schluß das Wirbelelement (16) angeströmt. Auf diese Weise ist sichergestellt, daß das Sensorelement stets laminar angeströmt ist. Bei umgekehrter Strömungsrichtung, also von rechts nach links, liegt das Sensorelement (12) in der vom Wirbelelement (16) hervorgerufenen Wirbelzone der Strömung, welche anschließend durch den Strömungsgleichrichter (32) abströmt. Das als elektrisch beheiztes temperaturabhängiges Widerstandselement (112) ausgebildete Sensorelement (12) wird in der turbulenten Strömung nicht ebenso gleichmäßig abgekühlt wie in der laminaren Strömung. Entsprechend der Wirbelfrequenz ändert sich somit der elektrische Widerstand des Widerstandselementes.

In Fig. 2 ist mit Bezugszeichen (112) das im Strömungskanal (10) angeordnete temperaturabhängige Widerstandselement und mit den Bezugszeichen (42, 44) und (46) sind die Festwiderstände der Brückenschaltung bezeichnet, wobei die Widerstände (112) und (46) sowie (42) und (44) jeweils als Spannungsteiler geschaltet sind. Die Speisung der Brückenschaltung erfolgt über eine variable Spannungs-/Stromquelle (50). Entsprechend der temperaturabhängigen Widerstandsänderung des Widerstands (112) tritt an den Meßpunkten zwischen den Widerständen (42) und (44) bzw. zwischen den Widerständen (112) und (46) eine Spannungsdifferenz in der Brückendiagonalen auf. Aus dieser Spannungsdifferenz wird über einen Verstärker (52) ein Korrektursignal geformt, das nach Durchlaufen eines Hochpasses (51) einem Integrator (53) zur Mittelwertbildung zugeführt wird. Der Hochpaß (51) ist auf die Turbulenzfrequenz abgestimmt, so daß er nur die von dieser hervorgerufenen Signalanteile passieren läßt. Die von der Spannungsquelle (50) abgegebene Speisespannung für die Brückenschaltung wird in Abhängigkeit vom Meßsignal einer Massenstrom-Meßvorrichtung (66) gesteuert. Dadurch wird erreicht, daß bei hohem Massenfluß eine stärkere Beheizung des Widerstandselementes (112) erfolgt, als bei geringem Massenfluß, oder anderen Worten, es wird eine Überhitzung des Widerstandselementes (112) bei niedrigem Massenfluß verhindert. Die Temperaturregelung erfolgt derart, daß das Widerstandselement (112) eine konstante Übertemperatur gegenüber dem anströmenden Fluid einnimmt.

Fig. 3 zeigt schematisch die Weiterleitung des vom Verstärker (52) über den Hochpaß (51) und den Integrator (53) abgegebenen Korrktursignals. Ein als Schwellwertschalter dienender Schmitt-Trigger siebt einerseits zu niedrige Signale aus und gibt andererseits ein konstantes Signal unabhängig von der Größe des Eingangssignals weiter. Der Ausgang des Schmitt-Triggers (54) ist mit einem Eingang (60) einer Steuereinheit (64) verbunden. An einem weiteren Eingang (62) der Steuereinheit (64) wird das Meßsignal der Massenstrom-Meßvorrichtung (66) empfangen. Der Ausgang der Steuereinheit (64) ist mit einer Treibstoff-Dosiervorrichtung (70) verbunden. Die Pulsation des Massenstromes, welche zu pulsierenden Signalen führen, werden mittels eines Integrators (68) geglättet.

Bei hoher Geschwindigkeit der Ansaugströmung durch den Strömungsgleichrichter weden Restturbulenzen nicht mit Sicherheit eliminiert, so daß die Abgabe fehlerhafter Korrektursignale erfolgen könnte. Genauso störend ist es, daß die Intensität der durch den Störkörper erzeugten Turbulenzen und damit die Amplitude des Rauschsignals vom Massenstrom abhängt. Um dies mit Sicherheit auszuschließen ist der Schmitt-Trigger (54) mit der Massenstrom-Meßvorrichtung (66) verbunden, um den Eingangslevel des Schmitt-Triggers zu steuern. Bei hohem Massenstrom ist nunmehr der Eingangspegel des Schmitt-Triggers so weit angehoben, daß Turbulenzsignale unterhalb eines gewissen Schwellwertes ignoriert werden.

Da Massenstrom-Meßvorrichtung (66) und das der Richtungserkennung dienende Widerstandselement (12) an unterschiedlichen Stellen im Ansaugsystem angeordnet sind, ist ein Phasenschieber (56) vorgesehen, welcher für die Synchronisation der Signale sorgt. Zur Korrektur der Impulslänge der Meßsignale ist weiterhin ein Monoflop (58) vorgesehen, der es ermöglicht, die Impulsdauer des Korrektursignals verschieden von der Impulslänge des Eingangssignales zu steuern.

Die Steuereinheit (64) hat die Aufgabe, das an die Treibstoff-Dosiervorrichtung abgegebene Signal, welches in der Hauptsache durch die Massenstrom-Meßvorrichtung beeinflußt ist, entsprechend dem Korrektursignal anzupassen. Entsprechend dem nur bei Rückströmung auftretenden Korrektursignal wird von der Steuereinheit, das während dieser Phase der Pulsation eingehende Meßsignal der Massenstrom-Meßvorrichtung entweder unterdrückt, vom Wert des während der übrigen Phase eingehenden Meßsignal auf einen zwischen dem Meßwert und Null liegenden Bruchteil reduziert, wobei das Maß des Bruchteils sowohl von der Motordrehzahl als auch von der Höhe des Massenstromes abhängig ist.

**Patentansprüche**

1. Vorrichtung zur Bestimmung der Durchflußrichtung eines mit bekanntem Massenstrom im wesentlichen gerichtet strömenden Fluids mit einem Bauelement (32) zur Erzeugung einer laminaren Strömung, einem diesem zugeordneten, elektrische Signale abgebenden, turbulenzempfindlichen Sensorelement (12), und einem Wirbel bildenden Element (16), dadurch gekennzeichnet, daß das turbulenzempfindliche Sensorelement (12) im Strömungsverlauf zwischen dem Bauelement (32) zur Erzeugung einer laminaren Strömung und dem Wirbel bildenden Element (16) angeordnet ist, so daß das Sensorelement (12) einer stark turbulenten Strömung ausgesetzt ist, wenn das Fluid in Richtung vom Wirbel bildenden Element (16) zum Sensorelement (12) strömt, und einer ungestörten laminaren Strömung ausgesetzt ist, wenn das Fluid in umgekehrter Richtung strömt.

2. Vorrichtung nach Anspruch 1, dadurch gekennzeichnet, daß das Sensorelement (12) ein elektrisch beheiztes temperaturabhängiges Widerstandselement (112) ist.

3. Vorrichtung nach Anspruch 2, dadurch gekennzeichnet, daß das Widerstanselement (112) einen positiven Temperatur-Koeffizienten aufweist.

4. Vorrichtung nach Anspruch 2, dadurch gekennzeichnet, daß das Widerstandselement (112) einen negativen Temperatur-Koeffizienten aufweist.

5. Vorrichtung nach Anspruch 3 oder 4, dadurch gekennzeichnet, daß das Widerstandselement (112) drahtförmig ausgebildet ist.

6. Vorrichtung nach Anspruch 3 oder 4, dadurch gekennzeichnet, daß das Widerstandselement (112) folienförmig ausgebildet ist.

7. Vorrichtung nach Anspruch 2, dadurch gekennzeichnet, daß eine Regeleinheit (50) zur Regelung der Speisespannung des temperaturabhängigen Widerstandselementes (112) vorgesehen ist.

8. Vorrichtung nach Anspruch 1, dadurch gekennzeichnet, daß diese mit einer an sich bekannten Vorrichtung zur Steuerung der Treibstoffeinspritzung für einen Verbrennungsmotor in Abhängigkeit vom Massenstrom der angesaugten Luftmenge verbunden ist, wobei die Treibstoffdosierung in Abhängigkeit von den bei turbulenter Strömung abgegebenen Signalen des Sensorelementes (12) erfolgt.

9. Vorrichtung nach Anspruch 8, dadurch gekennzeichnet, daß das Sensorelement (12) mit dem Eingang eines Verstärkers (52) verbunden ist, dessen Ausgang über einen Schmitt-Trigger (54) mit dem Eingang (60) einer Steuereinheit (64) verbunden ist, welche mit einem zweiten Eingang (62) außerdem mit einer Massenstrom-Meßvorrichtung (66) und ausgangseitig mit einer Treibstoff-Dosiervorrichtung (70) verbunden ist.

10. Vorrichtung nach Anspruch 9, dadurch gekennzeichnet, daß zwischen dem Ausgang der Steuereinheit (64) und dem Eingang der Treibstoff-Dosiervorrichtung (66) ein Integrator (68) angeordnet ist.

11. Vorrichtung nach Anspruch 10, dadurch gekennzeichnet, daß zwischen dem Verstärker (52) und dem Schmitt-Trigger (54) ein als Hochpaß ausgebildetes Bandfilter (51) und ein Integrator (53) angeordnet sind.

12. Vorrichtung nach Anspruch 11, dadurch gekennzeichnet, daß der Schmitt-Trigger (54) zur Anpassung seines Eingangspegels mit der Massenstrom-Meßvorrichtung (66) verbunden ist.

13. Vorrichtung nach einem der Ansprüche 11 oder 12, dadurch gekennzeichnet, daß der Schmitt-Trigger (54) zur Anpassung seines Eingangspegels mit einer Drehzahl-Meßvorrichtung und/oder einer Vorrichtung zur Erfassung des Öffnungswinkels der Drosselklappe einer Verbrennungskraftmaschine verbunden ist.

14. Vorrichtung nach Anspruch 11, dadurch gekennzeichnet, daß zwischen dem Ausgang des Schmitt-Triggers (54) und dem Eingang (60) der Steuereinheit (64) ein Phasenschieber (56) und/oder ein Monoflop (58) angeordnet ist.

15. Vorrichtung nach Anspruch 9, dadurch gekennzeichnet, daß die Steuereinheit (64) das von der Massenstrom-Meßvorrichtung (66) eingehende Meßsignal solange unterdrückt, wie ein Korrektursignal am Eingang (60) anliegt.

16. Vorrichtung nach Anspruch 9, **dadurch gekennzeichnet**, daß die Steuereinheit (64) den während der Zeitdauer eines am Eingang (60) anliegenden Korrektursignals festgestellten Wert des von der Massenstrom-Meßvorrichtung eingehenden Meßsignals von demjenigen Wert des Meßsignals subtrahiert, der im Zeitraum ausbleibenden Korrektursignals festgestellt ist.

17. Vorrichtung nach Anspruch 9, **dadurch gekennzeichnet**, daß die Steuereinheit (64) den während der Zeitdauer eines am Eingang (60) anliegenden Korrektursignals festgestellten Wert des von der Massenstrom-Meßvorrichtung eingehenden Meßsignals auf einen vorher bestimmten Bruchteil reduziert.

## Claims

1. Apparatus for the determination of the direction of flow of a fluid flowing with know mass flow in substantially directional fashion, having a compo nent (32) for generating a laminar flow, a turbulencesensitive sensor element (12) associated with the latter and emitting electrical signals, and a vortex-forming element (16), characterized in that the turbulencesensitive sensor element (12) is arranged in the path of flow between the component (32) for generating a laminar flow and the vortex-forming element (16), with the result that the sensor element (12) is exposed to a highly turbulent flow when the fluid flows in the direction from the vortex-forming element (16) to the sensor element (12) and is exposed to an undisturbed laminar flow when the fluid flows in the opposite direction.

2. Apparatus according to Claim 1, characterized in that the sensor element (12) is an electrically heated temperature-dependent resistor element (112).

3. Apparatus according to Claim 2, characterized in that the resistor element (112) has a positive temperature coefficient.

4. Apparatus according to Claim 2, characterized in that the resistor element (112) has a negative temperature coefficient.

5. Apparatus according to Claim 3 or 4, characterized in that the resistor element (112) is in the form of wire.

6. Apparatus according to Claim 3 or 4, characterized in that the resistor element (112) is in the form of film.

7. Apparatus according to Claim 2, characterized in that a regulating unit (50) for regulating the supply voltage of the temperature-dependent resistor element (112) is provided.

8. Apparatus according to Claim 1, characterized in that this is connected to an apparatus, know per se, for controlling the fuel injection for an internal combustion engine as a function of the mass flow of the air quantity taken in, fuel metering being effected as a function of the signals emitted by the sensor element (12) in the case of turbulent flow.

9. Apparatus according to Claim 8, characterized in that the sensor element (12) is connected to the input of an amplifier (52), the output of which is connected via a Schmitt trigger (54) to the input (60) of a control unit (64) which is furthermore connected by a second input (62) to a mass-flow measuring apparatus (66) and, on the output side, to a fuel metering apparatus (70).

10. Apparatus according to Claim 9, characterized in that an integrator (68) is granged between the output of the control unit (64) and the input of the fuel metering apparatus (70).

11. Apparatus according to Claim 10, characterized in that a band-pass filter (51), designed as a high pass, and an integrator (53) are arranged between the amplifier, (52) and the Schmitt trigger (54).

12. Apparatus according to Claim 11, characterized in that, for the purpose of adjusting the input level of the Schmitt trigger (54), said Schmitt trigger is connected to the mass-flow measuring apparatus (66).

13. Apparatus according to either of Claims 11 or 12, characterized in that, for the purpose of adjusting the input level of the Schmitt trigger (54), said Schmitt trigger is connected to a speed measuring apparatus and/or an apparatus for detecting the opening angle of the throttle valve of an internal combustion engine.

14. Apparatus according to Claim 11, characterized in that a phase shifter (56) and/or a monoflop (58) is arranged between the output of the Schmitt trigger (54) and the input (60) of the control unit (64).

15. Apparatus according to Claim 9, characterized in that the control unit (64) suppresses the measurement signal entering from the mass-flow measuring apparatus (66) for as long as a correction signal is applied to the input (60).

16. Apparatus according to Claim 9, characterized in that the control unit (64) subtracts the value of the measurement signal entering from the mass-flow measuring apparatus, said value being established during the duration of a correction signal applied to the input (60), from that value of the measurement signal which is established in the period during which the correction signal is absent.

17. Apparatus according to Claim 9, characterized in that the control unit (64) reduces, to a predetermined fraction the value of the measurement signal entering from the mass-flow measuring apparatus, said value being established during the duration of a correction signal applied to the input (60).

## Revendications

1. Dispositif destiné à déterminer le sens d'écoulement d'un fluide pratiquement canalisé qui s'écoule sous un débit connu, dispositif comportant un élément fixe (32) destiné à provoquer un écoulement laminaire, un élément détecteur (12) qui coopère avec lui, est sensible aux turbulences et délivre des signaux électriques, et un élément perturbateur (16) provoquant de la turbulence, dispositif caractérisé en ce que l'élément détecteur (12) sensible aux turbulences est disposé, dans le sens de l'écoulement, entre l'élément fixe (32) destiné à créer un écoulement laminaire et l'élément perturbateur (16) qui provoque les turbulences, si bien que cet élément détecteur (12) est exposé à un courant fortement turbulent lorsque le fluide passe dans le sens allant de l'élément perturbateur (16), provoquant de la turbulence, audit élément détecteur (12), et à un écoulement laminaire non perturbé lorsque le fluide passe dans le sens opposé.

2. Dispositif selon la revendication 1, caractérisé en ce que l'élément détecteur (12) est une résistance (112) dont la valeur dépend de la température (ou thermistance), chauffée électriquement.

3. Dispositif selon la revendication 2, caractérisé en ce que la thermistance (112) a un coefficient de température positif.

4. Dispositif selon la revendication 2, caractérisé en ce que la thermistance a un coefficient de température négatif.

5. Dispositif selon la revendication 3 ou 4, caractérisé en ce que la thermistance (112) est filiforme.

6. Dispositif selon la revendication 3 ou 4, caractérisé en ce que la thermistance (112) a la conformation d'une lamelle mince.

7. Dispositif selon la revendication 2, caractérisé en ce qu'il comporte un circuit de réglage (50) destiné à régler la tension d'alimentation de la thermistance (112).

8. Dispositif selon la revendication 1, caractérisé en ce qu'il est relié à un dispositif, connu en soi, de réglage de l'injection du carburant dans un moteur à combustion interne, en fonction du débit massique de l'air d'aspiration, l'introduction dosée du carburant étant effectuée en fonction des signaux délivrés par l'élément détecteur (12) pendant l'écoulement turbulent.

9. Dispositif selon la revendication 8, caractérisé en ce que l'élément détecteur (12) est connecté à l'entrée d'un amplificateur (52), dont la sortie est reliée par l'intermédiaire d'une bascule (54) de Schmitt à une entrée (60) d'un circuit (64) de commande, lequel est par ailleurs relié par une seconde entrée (62) à un dispositif (66) de mesure de débit massique et, du côté de sortie, à un dispositif (70) d'introduction dosée du carburant.

10. Dispositif selon la revendication 10 caractérisé en ce qu'un intégrateur (68) est disposé entre la sortie du circuit (64) de commande et l'entrée du dispositif (70) d'introduction dosée du carburant.

11. Dispositif selon la revendication 10, caractérisé en ce qu'un filtre (51) passe-bande, agencé en filtre passe-haut, et un intégrateur (53) sont disposés entre l'amplificateur (52) et la bascule (54) de Schmitt.

12. Dispositif selon la revendication 11, caractérisé en ce que, afin d'adapter son niveau d'entrée, la bascule (54) de Schmitt est reliée au dispositif (66) de mesure du débit massique.

13. Dispositif selon l'une des revendications 11 et 12, caractérisé en ce que, afin d'adapter son niveau d'entrée, la bascule (54) de Schmitt est reliée à un dispositif de mesure de la vitesse de rotation et/ou à un dispositif de détection de l'angle d'ouverture du papillon d'un moteur à combustion interne.

14. Dispositif selon la revendication 11, caractérisé en ce qu'un déphaseur (56) et/ou un multivibrateur monostable (58) est ou sont disposé(s) entre la sortie de la bascule (54) de Schmitt et l'entrée (60) du circuit (64) de commande.

15. Dispositif selon la revendication 9, caractérisé en ce que le circuit (64) de commande supprime le signal de mesure provenant du dispositif (66) de mesure du débit massique aussi longtemps qu'un signal correcteur est appliqué sur son entrée (60).

16. Dispositif selon la revendication 9, caractérisé en ce que, pendant la durée d'application d'un signal correcteur sur son entrée (60), le circuit (64) de commande retranche la valeur constatée du signal de mesure provenant du dispositif de mesure du débit massique de la valeur de ce signal de mesure qui est constatée dans le laps de temps pendant lequel il n'y a pas de signal correcteur.

17. Dispositif selon la revendication 9, caractérisé en ce que, pendant la durée d'application d'un signal correcteur sur son entrée (60), le circuit (64) de commande réduit à une fraction prédéterminée la valeur constatée du signal de mesure provenant du dispositif de mesure du débit massique.

FIG.1

FIG. 2

FIG. 3